# EUROPÄISCHE PATENTANMELDUNG

(11) **EP 0 593 411 A1**
(43) Veröffentlichungstag der Anmeldung: **20.04.1994**
(21) Anmeldenummer: 93890198.0
(22) Anmeldetag: 11.10.1993
(51) Int. Cl.: F16K 11/02

(54) **Vorrichtung zur Steuerung und/oder Bewegung von Fluiden**

(30) Priorität: 13.10.1992 AT 2014/92
(71) Anmelder: AVL Medical Instruments AG, CH-8207 Schaffhausen (CH)
(72) Erfinder: Grübler, Robert, Dr., A-8042 Graz (AT); Kleinhappl, Erich, Ing., A-8062 Weinitzen (AT); Mayer, Michael, A-8010 Graz (AT)
(74) Vertreter: Krause, Walter, Dr. Dipl.-Ing.

(57) **Zusammenfassung**

Vorrichtung zur Steuerung und/oder Bewegung von Fluiden in einem kapillaren Fluidkanal (5) mit einem Ventilelement (1), mit einer Membran (6) als Verschlußelement, welche im Verschlußbereich (15) des Ventilelementes (1) mit Druck beaufschlagbar in den Fluidkanal (5) dichtend einbringbar ist. Vielfältige und komplizierte Schaltfunktionen bei minimalem Totraum sind in einfacher Weise dadurch ermöglicht, daß die Membran (6) im unbelasteten Zustand einen stetig verlaufenden Teil der Wand des Fluidkanals (5) bildet, wobei die Form des Kanalquerschnittes in dem zumindest einen Verschlußbereich (15) und in den unmittelbar daran angrenzenden Bereichen des Fluidkanals (5) im wesentlichen konstant ist.

## Beschreibung

Die Erfindung betrifft eine Vorrichtung zur Steuerung und/oder Bewegung von Fluiden in einem kapillaren Fluidkanal mit einem Ventilelement, mit einer Membran als Verschlußelement, welche im Verschlußbereich des Ventilelementes mit Druck beaufschlagbar in den Fluidkanal dichtend einbringbar ist

In der Meßtechnik sowie in der Medizin ist es in vielen Fällen erforderlich, relativ kleine Mengen von Flüssigkeiten oder Gasen in kontrollierter Weise zu bewegen, d. h. zu pumpen oder verschiedene Strömungswege dieser Fluide zu öffnen oder zu verschließen.

Aus der AT-B 392 360 ist ein Ventil bekannt, bei dem eine Membran als Verschlußelement vorgesehen ist, welche bei Schließen des Ventiles in den Fluidkanal eingedrückt wird. Die Membran wird von einem Kolben bewegt, der seinerseits von einem Druckmedium beaufschlagbar ist.

Weiters sind ähnliche Ventile bekannt, bei denen ein Kolben elektromagnetisch betätigbar ist.

Diese bekannten Ventile besitzen, insbesondere wenn komplexere Schaltfunktionen realisiert werden sollen, in unvermeidlicher Weise Toträume. Dabei sind vor allem die Toträume zwischen dem verschlossenen Ende eines Kanals und der nächsten Verzweigung sind jedoch in vielen Anwendungsbereichen unerwünscht.

All diesen Ventilen ist weiters gemeinsam, daß für jedes Einzelventil mit den Stellungen ein/aus eine eigene Betätigungsvorrichtung erforderlich ist. Zur Herstellung von Mehrwegventilen mit komplizierteren Schaltstellungen sind daher mehrere oder viele Betätigungsvorrichtungen erforderlich, was den Aufwand beträchtlich erhöht. Außerdem sind der Miniaturisierung solcher Ventile dadurch deutliche Grenzen gesetzt.

Aufgabe der Erfindung ist es, diese Nachteile zu vermeiden und eine Vorrichtung der obengenannten Art zu schaffen, die es ermöglicht ein totraumfreies Umschalten von Ventilen auf kleinstem Raum zu realisieren.

Eine weitere Aufgabe der Erfindung ist es, die bekannten Ventile in der Art weiterzubilden, daß vielfältige und komplizierte Schaltfunktionen möglich sind, wobei der entsprechende Aufwand begrenzt bleiben soll. Diese Ventile sollen auf kleinstem Raum herstellbar sein. Eine einfache und kostengünstige Herstellung soll den Einsatz als sterilen Einwegartikel für medizinische Anwendungen möglich machen.

Eine weitere Aufgabe der Erfindung ist es, auch das Pumpen von Flüssigkeiten zu ermöglichen.

Erfindungsgemäß werden diese Aufgaben dadurch gelöst, daß die Membran im unbelasteten Zustand einen stetig verlaufenden Teil der Wand des Fluidkanals bildet, wobei die Form des Kanalquerschnittes in dem zumindest einen Verschlußbereich und in den unmittelbar daran angrenzenden Bereichen des Fluidkanals im wesentlichen konstant ist.

Grundelement der vorliegenden Erfindung ist beispielsweise eine T-Verzweigung, bei der mindestens ein Schenkel des T durch die Membran verschließbar ist. Toträume werden dadurch vermieden, daß das Material der Membran in verschlossenem Zustand bis zum Kreuzungspunkt des T den entsprechenden Ast des Fluidkanals vollständig ausfüllt.

Erfindungsgemäß ist dabei vorgesehen, daß das Ventilelement aus zwei Platten besteht, zwischen denen die vorzugsweise einstückig ausgeführte Membran eingelegt ist und daß in einer der Platten eine Nut eingearbeitet ist, die zusammen mit der Oberfläche der unbelasteten Membran den Fluidkanal bildet.

In einer Weiterbildung der Erfindung kann die Membran in den Verschlußbereichen vorzugsweise einstückig an der Membran angeformte Noppen aufweisen, an welchen Stößel eines Betätigungselementes angreifen. Diese Noppen können in einer allgemeinen Ausführung der Erfindung auch als separate, elastische Bauteile ausgeführt sein. Weiters ist es möglich, daß die elastischen Noppen an einem Stößel od.dgl. angeformt sind oder auch als verdickte Bereiche der Membran ausgeführt sind. Es ist jedoch auch möglich, die Membran in den Verschlußbereichen elektromagnetisch oder hydraulisch mit Druck zu beaufschlagen.

Die erfindungsgemäße Ausbildung der Vorrichtung erlaubt es Mehrwegventile zu realisieren, bei denen Toträume praktisch vermieden werden. So kann beispielsweise zwischen jeweils zwei Verschlußbereichen der Membran ein Anschluß totraumfrei in den Fluidkanal einmünden. Dies ist insbesondere bei medizinischen Meßgeräten wesentlich, bei denen es erforderlich ist durch einen Kanal nacheinander verschiedene Medien wie z.B. Spülflüssigkeiten, Kalibriermedien, Blut etc. zu leiten. Toträume verursachen in solchen Meßgeräten eine Speicherung vom jeweils verwendeten Medium. Nach dem Umschalten auf ein anderes Medium wird dieses von dem langsam aus dem Totraum herausgespülten ersten Medium verschmutzt. Der durch die Noppen erzielte Federeffekt ermöglicht einerseits eine Verringerung der Betätigungskraft, die wiederum eine kleinere Bauweise ermöglicht, als auch ein nahezu totraumfreies Verschließen des Kanals. Dies wird dadurch erreicht, daß beim Betätigen das Material der Membran den Fluid- bzw.Flüssigkeitskanal bis zum nächsten einmündenden Anschlußes verschließt.

Die Ausbildung der erfindungsgemäßen Vorrichtung als Einwegartikel, beispielsweise in medizinischen Dosiervorrichtungen, wird insbesonders dadurch ermöglicht, daß ein Ventilelement vorgesehen ist, das den Fluidkanal und die Membran umfaßt, und daß weiters ein Betätigungselement vorgesehen ist, das die Nocken und Stößel umfaßt, wobei Ventilelement und Betätigungselement lösbar miteinander verbunden sind. Die von Blut oder dergleichen kontaminierte Vorrichtung wird dabei nach der Verwendung entsorgt, der teure Antrieb bleibt jedoch für eine weitere Verwendung erhalten. Dies ist unproblematisch, da keinerlei Kontakt zum Medium gegeben ist.

Besonders günstig ist es, wenn die Stößel gefedert ausgebildet sind. Auf diese Weise kann die erfindungsgemäße Vorrichtung auf eine minimale Betätigungskraft hin optimiert werden.

Weiters können durch die gefederte Ausbildung der Stößel Toleranzen in einfacher Weise ausgeglichen werden. Dies ist wesentlich, da der Ventilteil im Sinne der Erfindung als billiger Wegwerfteil ausgebildet ist, bei dem relativ große Toleranzen zugelassen werden sollen. Die Stößel werden vorzugsweise über Nocken betätigt.

Die einzelnen Schaltstellungen der erfindungsgemäßen Vorrichtung sind auf den Umfang der Nocken verteilt, wobei jeder Winkelstellung der Nocken eine bestimmte Schaltstellung entspricht.

Besonders einfach und platzsparend wird die erfindungsgemäße Vorrichtung dadurch, daß die Nocken koaxial auf einer gemeinsamen Welle angeordnet sind. Die Nocken werden dabei gemeinsam angetrieben.

Insbesonders ist es günstig, wenn der Fluidkanal geradlinig ausgebildet ist und die Stößel parallel zueinander in einer gemeinsamen Ebene angeordnet sind. Dadurch wird eine besonders kompakte Bauweise möglich.

In einer besonders bevorzugten Ausführungsvariante der Erfindung ist vorgesehen, daß die Stößel von den Nocken über Kipphebel betätigbar sind.

Es ist möglich, daß als Antrieb für die Nocken ein Getriebemotor vorgesehen ist und daß weiters ein Positioniersystem vorgesehen ist, das eine genaue Steuerung der Bewegung der Nocken ermöglicht. Das Positionierungssystem kann dabei vorzugsweise aus einer koaxial zu den Nocken auf einer gemeinsamen Welle mit den Nocken angeordneten Positionierscheibe bestehen, deren Umfang von einem gehäusefest angeordneten Impulsgeber abgegriffen wird. Dadurch kann in einfacher Weise die jeweils gewünschte Ventilstellung erreicht werden.

In einer weiteren Ausbildung der Erfindung ist es möglich, daß mindestens drei Verschlußbereiche der Membran in Serie vorgesehen sind, welche zur Erzielung eines Pumpeffektes nacheinander betätigbar sind. Dabei sind mindestens drei Verschlußbereiche ohne dazwischenliegende Abzweigungen vorgesehen. Die Nocken sind in ihrer Form untereinander gleich und so ausgebildet, daß das Öffnen des Kanals in einem Verschlußbereich etwa mit dem Schließen im vorangegangenen Verschlußbereich zusammenfällt. Je mehr Nocken und Verschlußbereiche vorgesehen sind, desto gleichmäßiger kann die Pumpfunktion gestaltet werden. Auf diese Weise wird ein Pumpeffekt erzeugt, der etwa dem von Schlauchpumpen entspricht. Es ist selbstverständlich möglich, in ein und derselben Vorrichtung die Ventilfunktion und die Pumpfunktion miteinander zu verknüpfen.

In der Folge wird die Erfindung anhand der in den Figuren dargestellten Ausführungsbeispiele näher erläutert. Es zeigen schematisch:
- Fig. 1: eine erste Ausführungsvariante der Erfindung in einem seitlichen Teilschnitt,
- Fig. 2: eine Ansicht der Ausführungsvariante von Fig. 1 von oben,
- Fig. 3: eine weitere Ausführungsvariante der Erfindung in einem seitlichen Teilschnitt,
- Fig. 4: eine Ansicht der Variante von Fig. 3 von oben.

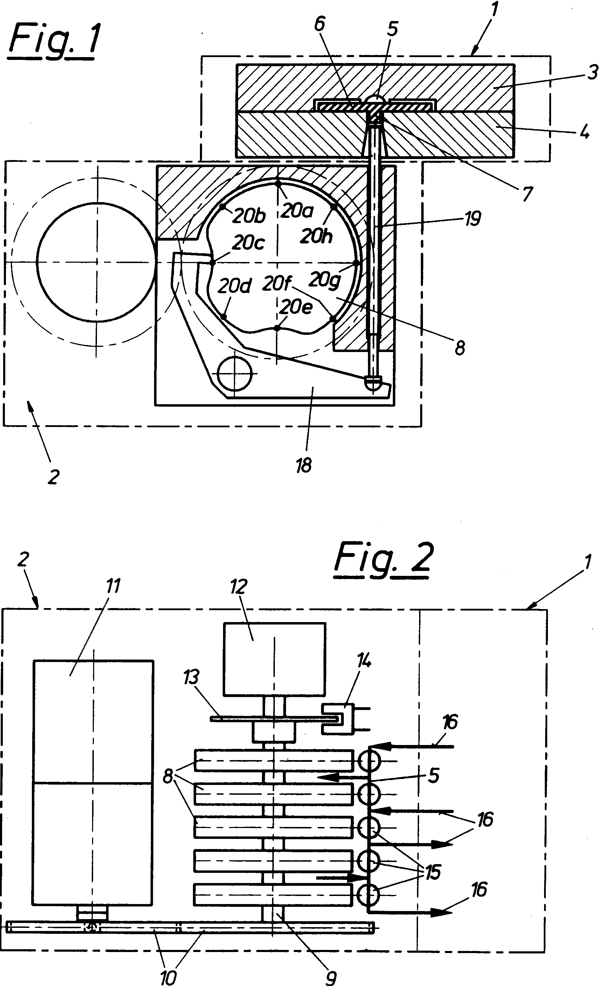

Die Vorrichtung nach Fig. 1 und Fig. 2 besteht aus einem Ventilelement 1 und einem Betätigungselement 2. Das Ventilelement 1 ist sehr einfach aufgebaut, um eine kostengünstige Massenfertigung zu ermöglichen, die die Verwendung als sterilen Einwegartikel erlaubt. Das Ventilelement 1 besteht aus einer oberen Platte 3 und einer unteren Platte 4, die über eine Membran 6 dicht miteinander verbunden sind. In die obere Platte 3 sind die Fluidkanäle 5 eingeformt. Die Membran 6 kann in jedem Verschlußbereich 15 eine angeformte Noppe 7 aufweisen.

Das Betätigungselement 2 weist im dargestellten Beispiel eine Mehrzahl von Nocken 8 auf, die auf einer gemeinsamen Welle 9 angeordnet sind. Die Welle 9 wird über Zahnräder 10 von einem Motor 11 angetrieben. Weiters ist auf der Welle 9 ein Positioniersystem vorgesehen, das aus einer als Potentiometer ausgebildeten Positioniervorrichtung 12, einer Positionierscheibe 13 und einem Impulsgeber 14 besteht. Die Positionierscheibe 13 ist beispielsweise als Schlitzscheibe ausgebildet, die von einem als Gabellichtschranke ausgebildeten Impulsgeber 14 abgegriffen wird, woraus die genaue Winkellage der Welle 9 bestimmbar ist. Das Potentiometer 12 hat dabei die Aufgabe, eine Absoluterkennung der Winkellage zu gewährleisten. Zur Erhöhung der Genauigkeit ist die Schlitzscheibe 13 vorgesehen, die es ermöglicht, relativ kleine Differenzwinkel zuverlässig zu messen. Der Fluidkanal 5 besitzt im dargestellten Fall fünf Verschlußbereiche 15. Der Verschlußbereich 15 umfaßt dabei die Gesamtheit aus Membran 6 samt allfälliger Noppe 7 und Betätigungselement (z.B. Stößel 19). Zwischen jeweils zwei Verschlußbereichen 15 sind Anschlüsse 16 vorgesehen. Weitere Anschlüsse 16 sind an den Enden des Fluidkanales 5 angeordnet. Der Druck auf die Membran 6 in den Verschlußbereichen 15 wird jeweils von einem Nocken 8 über einen um etwa 90 abgewinkelten Kipphebel 18 und einem vom Kipphebel 18 betätigten Stößel 19 gesteuert. Am Umfang jedes Nokkens 8 sind in Abstand von jeweils 45° acht Steuerpunkte 20a bis 20h vorgesehen, die jeweils einer bestimmten Stellung des zum Nocken 8 zugehörigen Verschlußbereiches 15 entsprechen. Das in den Fig. 1 und 2 dargestellte Ventil besitzt somit acht verschiedene Stellungen, in denen die Anschlüsse 16 in verschiedenster Weise miteinander verbunden sind.

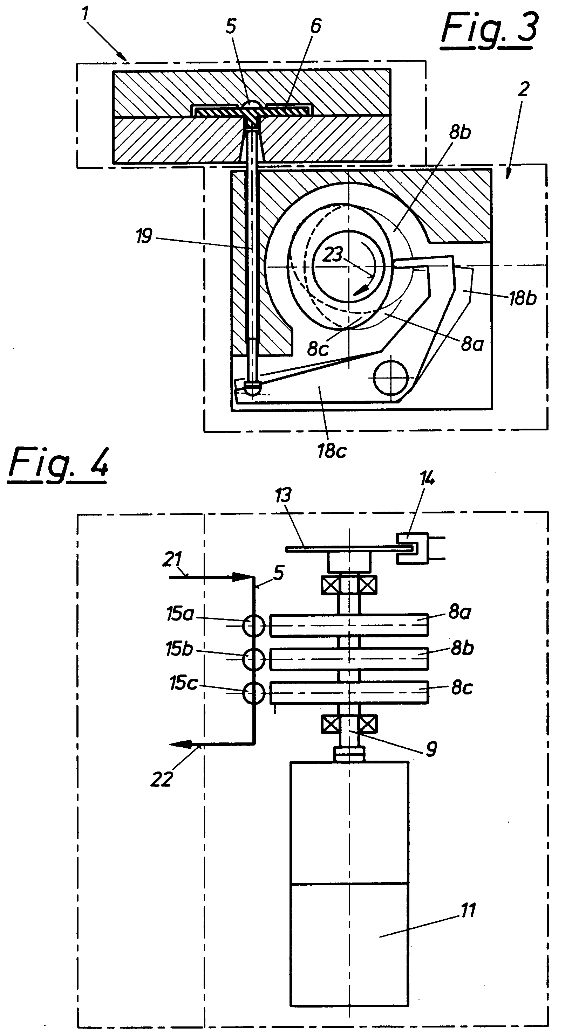

Bei der in den Fig. 3 und 4 dargestellten Ausführungsvariante handelt es sich um eine nach dem Prinzip einer Schlauchpumpe arbeitenden Flüssigkeitspumpe. Der Aufbau ist im wesentlichen identisch mit der Ausführungsvariante der Fig. 1 und 2. Unterschiedlich ist lediglich, daß zwischen den einzelnen Verschlußbereichen 15a, 15b und 15c keine Anschlüsse vorgesehen sind. Am einen Ende des Fluidkanals 5 ist ein Zufuhrkanal 21 vorgesehen, wogegen am anderen Ende ein Abfuhrkanal 22 angeordnet ist.

Die Bewegungsrichtung der Welle 9 ist mit dem Pfeil 23 angedeutet. Die Nocken 8a, 8b und 8c sind so ausgebildet, daß vom Anschluß 21 hin zum Anschluß 22 die Membran 6 in den Verschlußbereichen 15a, 15b und 15c nacheinander mit geringfügigen Überlappungen geöffnet werden. In der in Fig. 3 dargestellten Stellung ist der vorderste Verschlußbereich 15c gerade in seiner voll geöffneten Stellung. Wenn sich die Welle 9 um eine Vierteldrehung weiterbewegt, wird das Flüssigkeitsvolumen im Verschlußbereich 15c durch das Schließen bei der Auslaßöffnung 22 herausgepreßt. Nach einer weiteren Vierteldrehung öffnet sich der Kanal 5 im Verschlußbereich 15a, indem der Kipphebel 18a in die Vertiefung des Nockens 8a gleitet. Dadurch wird ein entsprechendes Flüssigkeitsvolumen am Anschluß 21 angesaugt. In weiterer Folge öffnen die Verschlußbe reiche 15b und 15c, wodurch die Ausgangsstellung wieder erreicht ist.

Es ist offensichtlich, daß die Pumpfunktion und die Ventilfunktion in einfacher Weise miteinander kombinierbar sind.

## Patentansprüche

1. Vorrichtung zur Steuerung und/oder Bewegung von Fluiden in einem kapillaren Fluidkanal (5) mit einem Ventilelement (1), mit einer Membran (6) als Verschlußelement, welche im Verschlußbereich (15) des Ventilelementes (1) mit Druck beaufschlagbar in den Fluidkanal (5) dichtend einbringbar ist, **dadurch gekennzeichnet**, daß die Membran (6) im unbelasteten Zustand einen stetig verlaufenden Teil der Wand des Fluidkanals (5) bildet, wobei die Form des Kanalquerschnittes in dem zumindest einen Verschlußbereich (15) und in den unmittelbar daran angrenzenden Bereichen des Fluidkanals (5) im wesentlichen konstant ist.

2. Vorrichtung nach Anspruch 1, **dadurch gekennzeichnet**, daß das Ventilelement (1) aus zwei Platten (3, 4) besteht, zwischen denen die vorzugsweise einstückig ausgeführte Membran (6) eingelegt ist und daß in einer der Platten (3) eine Nut eingearbeitet ist, die zusammen mit der Oberfläche der unbelasteten Membran (6) den Fluidkanal (5) bildet.

3. Vorrichtung nach Anspruch 1 oder 2, **dadurch gekennzeichnet**, daß zwischen jeweils zwei Verschlußbereichen (15) der Membran (6) ein Anschluß (16) totraumfrei in den Fluidkanal (5) mündet.

4. Vorrichtung nach Anspruch 1 oder 2, **dadurch gekennzeichnet**, daß mindestens drei Verschlußbereiche (15a, 15b, 15c) der Membran (6) in Serie vorgesehen sind, welche zur Erzielung eines Pumpeffektes nacheinander betätigbar sind.

5. Vorrichtung nach einem der Ansprüche 1 bis 4, **dadurch gekennzeichnet,** daß die Membran (6) in den Verschlußbereichen (15) vorzugsweise einstückig an der Membran (6) angeformte Noppen (7) aufweist, an welchen Stößel (19) eines Betätigungselementes (2) angreifen.

6. Vorrichtung nach Anspruch 5, **dadurch gekennzeichnet,** daß das Betätigungselement (2) Nocken (8, 8a, 8b, 8c) zur Betätigung der Stößel (19) aufweist, welche vorzugsweise koaxial auf einer gemeinsamen Welle (9) angeordnet sind.

7. Vorrichtung nach Anspruch 5 oder 6, **dadurch gekennzeichnet**, daß der Fluidkanal (5) geradlinig ausgebildet ist und daß die Stößel (19) parallel zueinander in einer gemeinsamen Ebene angeordnet sind.

8. Vorrichtung nach einem der Ansprüche 5 bis 7, **dadurch gekennzeichnet**, daß die Stößel (19) von den Nocken (8, 8a, 8b, 8c) über Kipphebel (18) betätigbar sind.

9. Vorrichtung nach einem der Ansprüche 5 bis 8, **dadurch gekennzeichnet**, daß als Antrieb für die Nocken (8a, 8b, 8c) ein Getriebemotor vorgesehen ist und daß weiters ein Positioniersystem vorgesehen ist, welcher eine genaue Steuerung der Bewegung der Nocken ermöglicht.
